# EUROPÄISCHE PATENTSCHRIFT

(11) **EP 0 560 122 B1**
(45) Veröffentlichungstag und Bekanntmachung des Hinweises auf die Patenterteilung: **17.11.1999**
(21) Anmeldenummer: 93102853.4
(22) Anmeldetag: 24.02.1993
(51) Int. Cl.: H04L 12/40

(54) **Kommunikationssystem mit Busstationen**
Communication system with stations along a bus
Système de communication avec des stations sur un bus

(30) Priorität: 11.03.1992 DE 4207675
(43) Veröffentlichungstag der Anmeldung: 15.09.1993
(73) Patentinhaber: ROBERT BOSCH GMBH, 70442 Stuttgart (DE)
(72) Erfinder: Bubeck, Helmut, Dipl.-Ing., W-7145 Markgröningen (DE); Reim, Albrecht, Dipl.-Ing., W-7150 Backnang (DE)

(56) Entgegenhaltungen:
- HITACHI REVIEW, Bd.35, Nr.4, August 1986, TOKYO JP Seiten 173 - 176 OSAMU TAKADA ET AL. 'Fiberoptic Local Area Sigma Network'
- FUJITSU-SCIENTIFIC AND TECHNICAL JOURNAL, Bd.22, Nr.2, Juni 1986, KAWASAKI JP Seiten 106 - 113 TAKATOSHI MINAMI ET AL. 'High-Speed Optical Loop Network for Flexible Multi-Service Integration'

## Beschreibung

Die Erfindung geht aus von einem Kommunikationssystem gemäß dem Oberbegriff des Patentanspruchs 1.

Aus NTG Fachberichte Bd 80 (März 1982), S. 157 bis 164 ist ein Kommunikationssystem bekannt, welches den Aufbau von linienförmigen, sternförmigen und sternförmig verzweigten Schleifennetzen erlaubt. In einem solchen Netz sind alle Busstationen mit einer Sendeleitung und einer Empfangsleitung verbunden. Die von den Busstationen in die Sendeleitung eingespeisten Informationen werden an einer Stelle im Übertragungsnetz in die Empfangsleitung umgeleitet, aus der die Busstationen die an sie gerichteten Informationen entnehmen. Die Informationsübertragung auf dem Übertragungsnetz erfolgt im Zeitmultiplex, so daß dieses System eine zentrale Busstation mit Taktzentrale und Rahmensynchronisiergenerator erfordert, in der zweckmäßigerweise auch die Netzüberwachung und Überleitung des Datenstromes von der Sendeleitung auf die Empfangsleitung untergebracht sind. Nachteilig dabei ist, daß die Überleitung des Datenstromes nur in einer Busstation an einer Stelle im Netz erfolgen darf. Ferner ist beim Aufbau von Linien- und vermaschten Busnetzen darauf zu achten, daß keine Ringe geschaltet werden.

Aus der DE 33 40 992 Al ist ein digitales Kommunikationsnetz in Form eines Schleifennetzes bekannt, welches durch Ausbildung der Übertragungsstrecke als Ring auch bei einer Leitungsunterbrechung oder Ausfall einer Teilnehmerstation voll funktionsfähig bleibt. Nachteilig hierbei ist, daß ein solches Netz nur als einfacher Ring mit gleichartigen Teilnehmerstationen ausgebildet sein kann. Ein ähnliches System ist auch beschrieben in: O. TAKADA et al: 'Fiberoptic Local Area Sigma Network', HITACHI REVIEW, Bd.35, Nr.4, August 1986, Seiten 173-176.

Aus der DE 39 19 962 A1 ist ein Vernetzungssystem von Rechnern bekannt, bei dem das Auftreten einer Unterbrechung im Vernetzungssystem ermittelt werden kann und in Abhängigkeit davon eine redundante Verbindungseinrichtung des Vernetzungssystems aktiviert wird. Ringverbindungen können aufgelöst werden.

Alle aufgezeigten Netzkonfigurationen sind nicht in der Lage das Netz oder zumindest ein oder mehrere Teilnetze auch bei Mehrfachstörungen /-ausfällen weiterhin funktionsfähig zu halten.
Aufgabe der Erfindung ist es, das Kommunikationssystem so weiterzubilden, daß bei beliebiger Netzstruktur eine hohe Verfügbarkeit gewährleistet ist. Insbesondere soll bei Leitungsunterbrechungen und/oder Ausfällen oder Störungen einer oder mehrerer Busstationen immer noch eine größtmögliche Anzahl von Busstationen untereinander arbeiten können. Diese Aufgabe wird durch die Merkmale des Patentanspruchs 1 gelöst. Die weiteren Ansprüche betreffen vorteilhafte Ausgestaltungen.
Mit den Maßnahmen der Erfindung können physikalisch geschaltete Ringe auf einfache Weise erkannt und aufgelöst werden. Das System ist flexibel, da mehrere Busstationen ausgerüstet sind zentrale Netzsteuerfunktionen zu übernehmen. Durch eine geeignete Prioritätszuordnung ist auch bei Störungen ein geordneter Datentausch möglich.
Zufallszuordnungen, die zu weiteren Störungen führen könnten, sind ausgeschlossen. Änderungen der Netzkonfiguration sind auf einfache Weise möglich, z.B. durch Adressänderungen bzw. Änderungen der Prioritätszuordnungen. Insbesondere kleine Netze können bei Störungen/Ausfällen leicht rekonfiguriert werden.
Ausführungsbeispiele der Erfindung werden nun anhand der Zeichnungen erläutert. Es zeigen
Figur 1 ein verzweigtes Kommunikationsnetz ohne redundante Verbindungswege,
Figur 2 den Aufbau eines Zeitmultiplexrahmens für den Datentausch zwischen den Busstationen,
Figur 3 ein vermaschtes Kommunikationsnetz mit redundanten Verbindungswegen,
Figur 4 ein Kommunikationsnetz nach Fig. 3 mit einer Netzunterbrechung (Ausfall einer Bus - Anschlußleitung),
Figur 5 ein Kommunikationsnetz nach Fig. 3 mit zwei Netzunterbrechnungen (Ausfall einer Busstation und einer Bus-Anschlußleitung),
Figur 6 ein Blockschaltbild einer Busstation

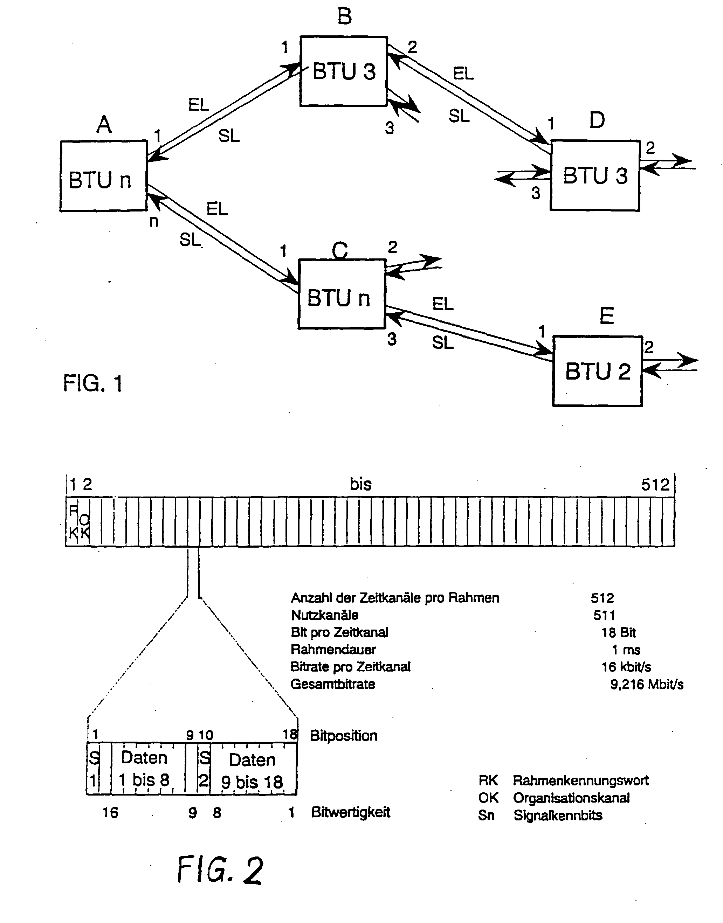

Die Fig. 1 zeigt eine verzweigte Netzkonfiguration gemäß der Erfindung im ungestörten Zustand und ohne jegliche Vermaschung. Das Kommunikationssystem mit unterschiedlich aufgebauten Busstationen (BTU n, mit n=1, 2, ... als Anzahl der Busanschlüsse) stellt ein sternförmig verzweigtes Übertragungsnetz dar mit entgegengesetzter Übertragungsrichtung (Sendeleitung SL, Empfangsleitung EL) zwischen den einzelnen Busstationen. An jede der Busstationen können verschiedenartige Teilnehmer wie Datenterminals, Rechner, Funkgeräte, Überwachungsmelder angeschlossen sein.

Das in Figur 1 gezeigte Netz ist logisch gesehen ein Schleifennetz, d.h. eine beliebige Busstation (in diesem Beispiel die Busstation A) übernimmt die Funktion der zentralen Busstation mit der Taktzentrale, indem sie in die abgehenden Übertragungsleitungen EL (Empfangsleitungen) durch das periodische Aussenden der Rahmenkennungsworte RK (Fig. 2) den Zeitmultiplexrahmen festlegt. Am Ende einer jeden Schleifenleitung wird in den letzten Busstationen C und D aus den Empfangsleitungen der Systemtakt (Rahmentakt) zurückgewonnen und der leere Zeitmultiplexrahmen mit dem zurückgewonnenen Systemtakt in die Sendeleitung SL zur zentralen Busstation A ausgesendet.

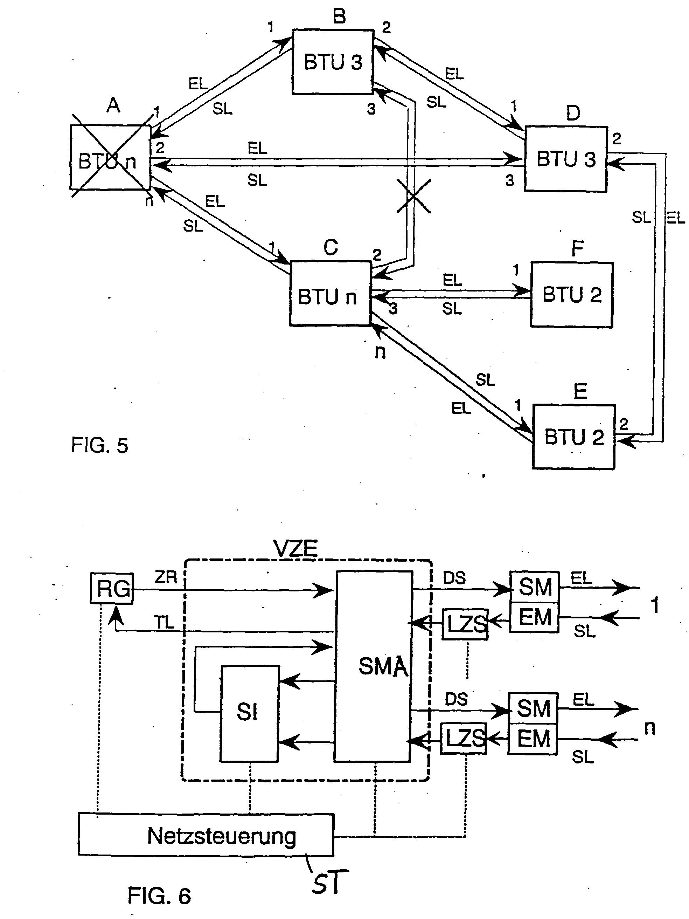

Die von den Busstationen BTU auszusendenden Informationen werden auf die Sendeleitung SL gegeben. In der zentralen Busstation A werden die Informationen in den jeder Sendeleitung SL₁ bis SLₙ zugeordneten Laufzeitspeichern LZS (Fig. 6) so verzögert, daß sie, vom Rahmensynchronisiergenerator RG gesteuert, takt- und rahmensynchron ausgelesen, zu einer Summeninformation zusammengefaßt und parallel in alle Empfangsleitungen EL₁ bis ELₙ wieder ausgesendet werden. Jede Busstation BTU empfängt so die Summe aller im Netz gesendeten Informationen, wertet jedoch nur diejenigen aus, die für sie bestimmt sind.

In dem ausgeführten Beispiel zeigt Figur 2 einen Zeitmultiplexrahmen mit 512 Zeitkanälen für die Informationsübertragung im Kommunikationssystem. Jeder Zeitkanal ist ein Time-Division-Multiple-Access-Kanal von z.B. 16 kbit/s. Der erste Zeitkanal enthält das Rahmenkennungswort RK. Die restlichen Zeitkanäle stehen der Nachrichtenübermittlung zur Verfügung. Den an die Busstationen BTU angeschalteten Endeinrichtungen werden die Zeitkanäle nur für die Dauer der Nachrichtenverbindung zugeordnet.

In Figur 6 ist das Blockschaltbild einer Busstation mit mehreren Busanschlüssen 1 bis n dargestellt, die auch die Funktionen der zentralen Busstation, wie Taktzentrale und Verzweigungseinheit zur Überleitung der Daten von den Sendeleitungen in die Empfangsleitungen, übernehmen kann. Der Rahmengenerator RG erzeugt den Systemtakt für den Zeitmultiplexrahmen ZR für das gesamte Netz oder wird durch eine der angeschalteten Empfangsleitungen EL über den Takt TL fremdgetaktet und legt durch das periodische Aussenden der Rahmenkennungsworte RK in allen seiner Empfangsleitungen EL₁ bis ELₙ den Zeitmultiplexrahmen fest. Über die Sendeleitungen empfangenen Informationen werden im Laufzeitspeicher LZS so verzögert, daß diese vom Rahmengenerator RG gesteuert takt- und rahmensynchron ausgelesen, in der Verzweigungseinheit VZE zu einer Summeninformation in einer Summiereinheit SI zusammengefaßt und mit dem leeren Zeitmultiplexrahmen ZR vom Rahmengenerator RG parallel in alle Empfangsleitungen EL₁ bis ELₙ wieder ausgesendet werden. Von der Netzsteuerung ST überwacht und gesteuert, werden über die Schaltmatrix SMA in der Verzweigungseinheit VZE die unterschiedlichen Anforderungen je nach Einsatzerfordernissen der Busstationen, wie
- Busstation mit aktiver oder passiver geschalteter Taktzentrale
- Auswahl der taktbestimmenden Anschlußleitung für die nachfolgenden Netzteile
- Passivschalten von Ringleitungen (stand-by ; vgl. nachfolgende Ausrührungsbeispiele)
die Schaltverpflichtungen durchgeführt. Der Inhalt des Organisationskanals wird über den Rahmengenerator RG für bestimmte abgehenden Leitungen verändert und für jede ankommende Leitung über den Laufzeitspeicher LZS ausgelesen und verändert.

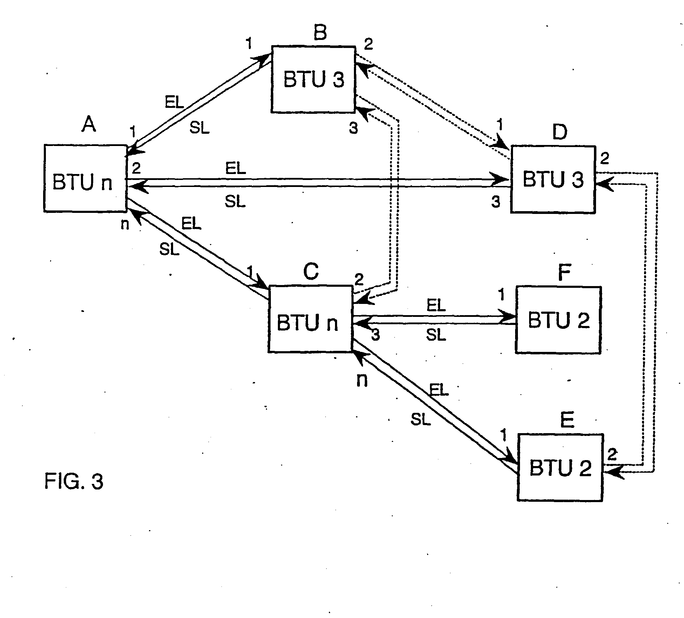

Um die Funktionssicherheit eines vermaschten Kommunikationssystems, wie in Figur 3 dargestellt, zu erhöhen, d.h. Auswirkungen beim Netzaufbau durch Schalten von Ringen oder bei Ausfall von Busstationen und/oder Leitungsabschnitten gering zu halten, sind die Netzsteuerfunktionen dezentral in allen oder einer reduzierten Anzahl von Busstationen (mindestens zwei) vorhanden. Der Ausfall von Busstationen oder Leitungsabschnitten wird über den Rahmensynchronismus in den vor- und nachgeschalteten Busstationen erkannt. Die Funktionssicherheit vermaschter Netze wird über einen Organisationskanal OK (Fig. 2) gesteuert, über den die Netzsteuerinformationen zwischen den Busstationen ausgetauscht werden. Der Organisationskanal OK im Zeitmultiplexrahmen kann ein oder mehrere Zeitkanäle umfassen.

Mit dem Rahmensynchronismus zwischen den einzelnen Busstationen werden die einzelnen Leitungsabschnitte überwacht. Das Schalten funktionsfähiger Netze, in die alle Busstationen eingebunden sind und physikalisch geschaltete Ringe logisch aufgetrennt werden, erfolgt über den gemeinsamen Organisationskanal OK.

Anhand von Figur 3 soll beispielhaft ein möglicher Steuerungsablauf im Organisationskanal OK mit der Zielvorgabe einer schnellen Reorganisation gestörter kleiner Netze aufgezeigt werden. Als Organisationskanal wird der zweite Zeitkanal im Zeitmultiplexrahmen Figur 2 festgelegt. Jeder Busstation wird gemäß Vorgabe 1 Bit im zweiten Zeitkanal Figur 2 fest zugeordnet. Die Bitposition (Bitwertigkeit) im Organisationskanal kann aus der Busstationsadresse abgeleitet werden, indem der Station A die höchste Bitwertigkeit, und der Station E die niedrigste Bitwertigkeit zugeordnet wird. Jede Busstation setzt in diesem Organisationszeitkanal auf jeder abgehenden Leitung das ihr zugewiesene Bit. Mit der weiteren Vorgabe, daß z.B. die Busstation mit der höchsten Bitwertigkeit die Funktion der zentralen Busstation mit Taktzentrale und Überleitung der Daten von den Sendeleitungen auf die Empfangsleitungen übernimmt, überprüft jede Busstation auf den ankommenden Leitungen den Zeitkanalinhalt des Organisationskanales. Die Busstation A mit der höchsten zugeordneten Adresse empfängt auf allen ankommenden Leitungen (SL₁₋ₙ) im Organisationskanal niederwertige Bits und übernimmt die Funktion der zentralen Busstation. In alle abgehenden Empfangsleitungen (EL₁₋ₙ) wird im Organisationskanal die zugeordnete Bitwertigkeit gesetzt und die Überleitung der Daten mit Summenbildung der Informationen von den Sendeleitungen parallel in alle Empfangsleitungen wird aktiviert.

Die Busstationen B und C empfangen über den Busleitungsanschluß 1 im Organisationskanal eine höhere Bitwertigkeit (Station A) und wählen diese als taktbestimmende Busanschlußleitung aus. Beide Stationen leiten aus der Empfangsleitung den Systemtakt ab und senden den leeren Zeitmultiplexrahmen mit der eigenen Bitwertigkeit im Organisationskanal in die Sendeleitung SL 1 zur Busstation A zurück. Gleichzeitig wird der über die Empfangsleitung EL 1 empfangene Organisationskanal von der Busstation A um die eigene Bitwertigkeit ergänzt und parallel in die restlichen abgehenden Busleitungen (2 und 3 der Station B und 2 bis n der Station C) ausgesendet. Über den Anschluß 3 an der Station B und den Anschluß 2 an der Station C empfangen beide Stationen ebenfalls die höchste Bitwertigkeit. Diese Adressengleichheit wird in beiden Stationen als physikalisch geschalteter Ring erkannt und für die weitere Informationsübertragung auf der jeweiligen ankommenden Leitungsseite gesperrt.

Die Busstation D empfängt über die Busanschlüsse 1 und 3 im Organisaitonskanal die höchste Bitwertigkeit. In Abhängigkeit der Signalübertragungslaufzeiten im Netz und der Verarbeitungsgeschwindigkeit in den Busstationen wird die Station D den Anschluß 3 als den taktbestimmenden Bussanschluß auswählen, der Busanschluß 1 wird für die Informationsübertragung gesperrt. Ergänzt um den Bitwert der eigenen Station D wird der empfangene Organisationskanalinhalt in die abgehenden Busleitungen des Bussanschlusses 1 und 2 zu den Stationen B und E ausgesendet. Die Busstation B erkennt im ankommenden Bitstrom am Busanschluß 2 den physikalisch geschalteten Ring, der für die Informationsübertragung weiterhin gesperrt bleibt.

Nach dem gleichen Vorgehensmuster wählen die Busstationen E und F die Empfangsleitung EL₁ am jeweiligen Busanschluß 1 als taktbestimmenden Busanschluß aus. Der Busanschluß 2 in der Station D und E wird als Ring erkannt und bleibt für die Informationsübertragung gesperrt.

Als Endstation eines Netzausläufers wird in den Busstationen E und F der Systemtakt aus der Empfangsleitung abgeleitet. Mit diesem Systemtakt wird in beiden Stationen E und F der leere Zeitmultiplexrahmen und der Organisaitonskanal mit der zugeordneten Bitwertigkeit in die abgehende Sendeleitung SL₁ am Busanschluß 1 zur Busstation C ausgesendet.

Die Busstation C erkennt im Organisationskanal der Sendeleitungen SL₃ bis SLₙ der Bussanschlüsse 1 bis n die geringere Bitwertigkeit gegenüber der Busstation A, faßt diese in der Summenbildung SI der Verzweigungseinheit VZE (Figur 6) zu einem Teilsummenbitstrom zusammen, ergänzt um die eigene Bitwertigkeit im Organisationskanal, und überträgt den gesamten Nachrichtenfluß in die Sendeleitung SL₁ am Busanschluß 1. Die gesperrten Leitungen, gestrichelt in Figur 3 dargestellt, werden über den Rahmensynchronismus als Stand-By-Leitungen weiterhin überwacht.

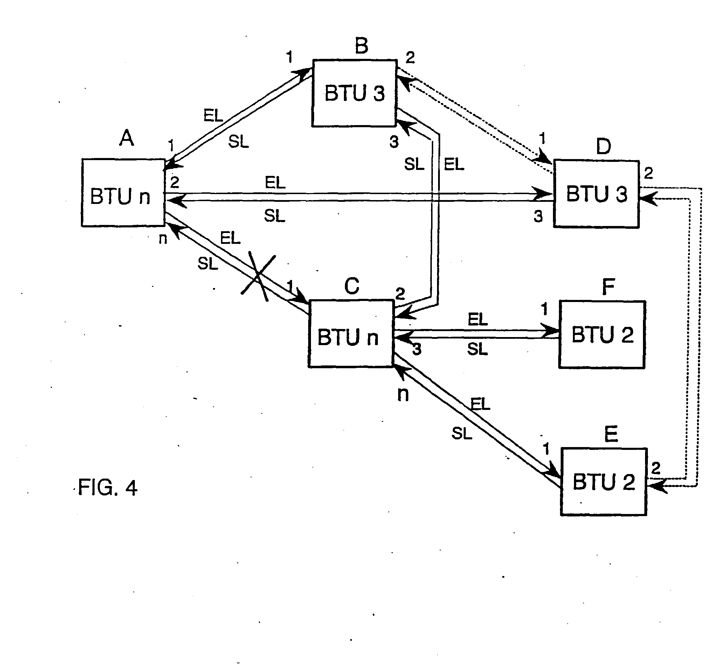

Eine Störung oder Leitungsunterbrechung nach Figur 4 zwischen der Busstation A und C führt zu einem Verlust des Synchronismus in den Busstationen C, E und F. Die Station C empfängt die höchste Bitwertigkeit nur noch über den Organisationskanal der Stand-By-Anschlußleitung 2 von der Station B und konfiguriert in der Verzweigungseinheit (Fig. 6) diese zum taktbestimmenden Anschluß um. Die über die Empfangsleitung EL₂ des Busanschlusses 2 empfangenen Informationen werden parallel in alle abgehenden Leitungen der Busanschlüsse 1 bis n, außer 2, ausgesendet. Die Busstationen E und F bleiben in ihrer gewählten Betriebsart, sodaß die Busstation C die Summeninformation, gebildet aus den Informationen der Sendeleitungen SL₃ bis SLₙ, in die Sendeleitung SL₂ zur Busstation B umleitet. Die Busstation B erkennt im Organisationskanal der Sendeleitung SL₃ am Bussanschluß 3 die niederwertigeren Bits gegenüber der Busstation A und schaltet den gesamten Nachrichtenfluß zur Sendeleitung SL1 am Busanschluß 1 weiter. In die gestörte Leitung werden von beiden Busstationen A und C weiterhin die Rahmenkennungsworte ausgesendet, so daß das Ende der Störung erkannt wird und die Leitung als Stand-by-Leitung wieder in Netz eingefügt werden kann.

In Figur 5 ist eine Doppelstörung, Ausfall einer Stand-by-Busanschlußleitung und der taktbestimmenden Busstation A (zentrale Busstation), dargestellt. Von allen Busstationen wird der Ausfall der taktbestimmenden Busstation A erkannt. Jede Busstation, die mit den taktbestimmenden Einrichtungen ausgestattet ist, hier beispielsweise B, C und D, übernimmt die Steuerung des Netzaufbaues. Die Busstation B mit der höchsten Adresse, gleich der höchsten Bitwertigkeit, setzt sich als taktbestimmende Busstation durch. Die verbleibende funktionsfähige Leitungskonfiguration ist ein Liniennetz bestehend aus den Busstationen B - D - E - C - F.

## Patentansprüche

1. Digitales vermaschtes Kommunikationssystem mit Busstationen (A, B, C, D, E, F), wobei mindestens ein redundanter Übertragungsweg zwischen mindestens zwei Busstationen (A, B, C, D, E) schaltbar ist, auf den insbesondere bei Störungen umgeschaltet werden kann, wobei mindestens zwei mit Busverzweigungseinrichtungen (VZE) ausgestattete Busstationen (A, B, C, D) vorgesehen sind und wobei letztere Busstationen jeweils mit einem Rahmengenerator (RG), insbesondere zur Ermöglichung einer rahmensynchronen Übertragung, und einer Steuereinrichtung (ST) zur Übernahme der Steuerfunktionen für das vermaschte Kommunikationsnetz ausgerüstet sind.

2. Kommunikationssystem nach Anspruch 1, dadurch gekennzeichnet, daß zumindest die mit den Busverzweigungseinrichtungen (VZE) ausgestatteten Busstationen (A, B, C, D) Einrichtungen (RG, SI, SMA, ST, SM, EM, LZS) zur Aussendung und zur Auswertung von Netzsteuerinformationen aufweisen.

3. Kommunikationssystem nach Anspruch 2, dadurch gekennzeichnet, daß die Netzsteuerinformationen in einem oder mehreren reservierten Zeitkanal/-kanälen (OK) des für die Übertragung vorgesehenen Zeitmultiplexrahmens untergebracht sind.

4. Kommunikationssystem nach Anspruch 1 oder 2, dadurch gekennzeichnet, daß die Übertragungswege zwischen den Busstationen (A, B, C, D, E, F) mittels Rahmenkennungsworten (RK) im Zeitmultiplexrahmen auf Störungen hin überwachbar sind.

5. Kommunikationssystem nach einem der Ansprüche 1 bis 4, dadurch gekennzeichnet, daß den Busstationen (A, B, C, D, E, F) in einem/in dem für die Netzsteuerinformation reservierten Zeitkanal (OK) eine Prioritätswertigkeit (PR) zugeordnet ist anhand derer, insbesondere bei Störungen, immer jene intakte Busstation mit der höchsten Prioritätswertigkeit (PR) als zentrale Busstation (A, B) für das gesamte Kommunikationsnetz arbeitet.

6. Kommunikationssystem nach einem der Ansprüche 1 bis 5, dadurch gekennzeichnet, daß geschaltete Ringe im Kommunikationsnetz, insbesondere durch die Auswertung von Prioritätswertigkeiten, auftrennbar sind.

7. Kommunikationssystem nach Anspruch 6, dadurch gekennzeichnet, daß die durch das Auftrennen von Ringen abgekoppelten Übertragungswege weiterhin auf ihre Funktionssicherheit mittels der Rahmenkennungswerte (RK) überwachbar sind.

## Claims

1. Digital network communication system having bus stations (A, B, C, D, E, F), in which at least one redundant transmission path can be connected between at least two bus stations (A, B, C, D, E) to which a change can be made in particular in the event of interference, in which case at least two bus stations (A, B, C, D) are provided which are equipped with bus splitter devices (VZE), and in which case the latter bus stations are each equipped with a frame generator (RG), in particular in order to allow frame-synchronous transmission, and with a control device (ST) for carrying out control functions for the network communication network.

2. Communication system according to Claim 1, characterized in that at least the bus stations (A, B, C, D) which are equipped with bus splitter devices (VZE) have devices (RG, SI, SMA, ST, SM, EM, LZS) for transmitting and for evaluating network control information.

3. Communication system according to Claim 2, characterized in that the network control information is accommodated in one or more reserved time channel/channels (OK) in the time-division multiplex frame provided for the transmission.

4. Communication system according to Claim 1 or 2, characterized in that the transmission paths between the bus stations (A, B, C, D, E, F) can be monitored for interference by means of frame identification words (RK) in the time-division multiplex frame.

5. Communication system according to one of Claims 1 to 4, characterized in that the bus stations (A, B, C, D, E, F) are assigned a priority level (PR) in a/ the time channel (OK) reserved for the network control information, on the basis of which, particularly in the event of interference, that intact bus station having the highest priority level (PR) always acts as the central bus station (A, B) for the entire communication network.

6. Communication system according to one of Claims 1 to 5, characterized in that switched rings in the communication network can be disconnected, in particular as a result of the evaluation of priority levels.

7. Communication system according to Claim 6, characterized in that the transmission paths which are decoupled by the disconnection of rings can still be monitored, with regard to their functional reliability, by means of the frame identification values (RK).

## Revendications

1. Système de communication numérique maillé avec des postes le long d'un bus (A, B, C, D, E, F), dans lequel au moins un trajet de transmission redondant peut être branché entre deux postes (A, B, C, D, E) le long du bus, trajet sur lequel on peut en particulier passer dans le cas de dérangements,
caractérisé en ce qu'
au moins deux postes le long du bus (A, B, C, D) équipés avec des dispositifs de ramification de bus (VZE) sont prévus et ces derniers postes sont respectivement équipés d'un générateur de trame (RG), en particulier pour permettre une transmission synchrone de trame et d'un dispositif de commande (ST) pour remplir les fonctions de commande du réseau maillé de communication.

2. Système de communication, selon la revendication 1,
caractérisé en ce qu'
au moins les postes (A, B, C, D) le long du bus qui sont équipés des dispositifs de ramification de bus (VZE) présentent des dispositifs (RG, SI, SMA, ST, SM, EM, LZS) qui servent à émettre et à exploiter des informations de commande du réseau.

3. Système de communication, selon la revendication 2,
caractérisé en ce que
les informations de commande du réseau sont logées dans un ou plusieurs canaux réservés de temps (OK) de la trame du multiplexage dans le temps, prévue pour la transmission.

4. Système de communication, selon la revendication 1 ou 2,
caractérisé en ce que
les trajets de transmission entre les postes (A, B, C, D, E, F) le long du bus peuvent être surveillés au moyen de mots de passe de trame (RK) dans la trame du multiplexage dans le temps en ce qui concerne des dérangements.

5. Système de communication, selon l'une des revendications 1 à 4,
caractérisé en ce qu'
on associe aux postes (A, B, C, D, E) le long du bus dans un canal de temps (OK) ou dans le canal de temps (OK) réservé pour l'information de commande du réseau une valeur de priorité (PR) à partir de laquelle, en particulier en cas de dérangements, celui des postes le long du bus qui est intact fonctionne avec la valeur significative de priorité (PR) la plus élevée en tant que poste central (A, B) le long du bus pour le réseau de communication tout entier.

6. Système de communication, selon l'une des revendications 1 à 5,
caractérisé en ce que
les anneaux branchés dans le réseau de communication, en particulier par l'exploitation des valeurs significatives de priorité, peuvent être défaits.

7. Système de communication, selon la revendication 6,
caractérisé en ce que
les trajets de transmission qui sont découplés en séparant des anneaux peuvent continuer à être surveillés quant à la sécurité de leur fonctionnement au moyen des mots de passe de la trame (RK).
